**Europäisches Patentamt**

**European Patent Office**

**Office européen des brevets**

(19)

(11) Veröffentlichungsnummer: **0 034 726**
**B1**

(12) # EUROPÄISCHE PATENTSCHRIFT

(45) Veröffentlichungstag der Patentschrift:
**12.10.83**

(21) Anmeldenummer: **81100673.3**

(22) Anmeldetag: **30.01.81**

(51) Int. Cl.³: **B 01 F 17/16,** B 01 F 17/22,
C 07 C 102/04, C 07 C 103/133,
C 07 C 51/41, C 07 C 57/02,
C 23 F 11/14

(54) **Verfahren zur Herstellung von Umsetzungsprodukten aus Fettsäuren und Alkanolaminen sowie die Verwendung der Umsetzungsprodukte als technische Emulgatoren.**

(30) Priorität: **19.02.80 DE 3006115**

(43) Veröffentlichungstag der Anmeldung:
**02.09.81 Patentblatt 81/35**

(45) Bekanntmachung des Hinweises auf die Patenterteilung:
**12.10.83 Patentblatt 83/41**

(84) Benannte Vertragsstaaten:
**DE FR GB IT**

(56) Entgegenhaltungen:
**DE - A - 2 623 085**
**US - A - 2 484 146**
**US - A - 2 540 678**
**US - A - 3 244 638**

**SEIFEN, ÖLE, FETTE, WACHSE, Band 85, Nr. 25, 1962 Augsburg H. MANNECK ,,Fettsäure-Alkyl-olamide'' Seiten 853 bis 855**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Helfert, Herbert, Dr., Albrecht-Duerer-Ring 25,
D-6710 Frankenthal (DE)**
Erfinder: **Wulz, Klaus, Dr., Gerolfstrasse 9,
D-6715 Lambsheim (DE)**
Erfinder: **Getto, Elmar, Tullastrasse 10,
D-6800 Mannheim (DE)**
Erfinder: **Hettche, Albert, Dr., Kleistrasse 12,
D-6711 Hessheim (DE)**

## Verfahren zur Herstellung von Umsetzungsprodukten aus Fett säuren und Alkanolaminen sowie die Verwendung der Umsetzungsprodukte als technische Emulgatoren

Die Erfindung betrifft die Herstellung spezieller Reaktionsprodukte aus Alkanolaminen und Fettsäuren bei erhöhter Temperatur, die als technische Emulgatoren vor allem bei Metallbearbeitungsprozessen brauchbar sind, und die zudem schaumarm sind und korrosionsschützend wirken.

Metallarbeitungsmittel für die spanabhebende und nicht spanabhebende Bearbeitung von Metallen müssen gleichzeitig schmieren und kühlen. Dies erreicht man am besten mit Öl-in-Wasser-Emulsionen, wobei das Öl die schmierende und das Wasser die kühlende Komponente darstellt. Damit eine stabile Emulsion vorliegt, benötigt man einen möglichst nicht schäumenden Emulgator. Zur Vermeidung der durch den Wasseranteil auftretenden Korrosiven Angriffe auf das zu behandelnde Metall muss ausserdem ein Korrosionsschutzmittel anwesend sein. Solche Emulsionen können auch für Kühlflüssigkeiten verwendet werden.

Bisher konnte man z.B. Dialkanolaminsalze von längerkettigen gesättigten oder ungesättigten Fettsäuren, die sowohl emulgierend als auch antikorrosiv wirken, und die sich sowohl in der Öl- als auch in der Wasserphase feindispers verteilen, zu diesem Zwecke einsetzen.

Da diese Seifen aber noch zu stark schäumen, war man gezwungen, noch schaumdämpfende Stoffe zuzusetzen. Dies erreichte man z.B. dadurch, dass man Dialkanolamide von Fettsäuren verwendete, die durch vollständige Umsetzung bei niedrigen Temperaturen erhalten wurden, welche aber bezüglich ihrer Emulgier- und Korrosionsschutzwirkung bedeutend schwächer, jedoch schaumarm sind. (Vgl. „Seifen, Öl, Fette, Wachse 103 (1977), 167(6) und Z. Werkstofftechn. 8, 323 (1977).

Es mussten bei der Mischung, um eine befriedigende Schaumarmut zu erreichen, an der Emulgier- und Korrosionsschutzwirkung Abstriche gemacht werden, wenn die Mischung in geringeren Mengen der Emulsion zugesetzt wurde — es mussten häufig noch weitere Emulgier- und Korrosionsschutzmittel eingesetzt werden.

Aus der FR-E 92119 sind wasserlösliche Kondensationsprodukte aus Säuren, wie Bor- oder Phosphorsäure, sowie Dicarbonsäuren oder Monocarbonsäuren, die vorzugsweise 4 bis 10 Kohlenstoffatome aufweisen, mit Alkanolaminen bekannt, die als Korrosionsschutzmittel wirken sollen. Wie sich aus Seite 1, Spalte 2 dieser Publikation ergibt, muss bei der Herstellung die Reaktion bei Temperaturen zwischen 120 und 170° C so lange durchgeführt werden, bis mindestens 90% der theoretischen Menge an anfallendem Reaktionswasser abgeschieden worden sind. Diese Produkte weisen Säurezahlen von <7 auf und sind, wie wir weiter unten zeigen können, als Korrosionsschutzmittel noch zu wenig und als Emulgatoren nur mässig wirksam.

Das Ziel der Erfindung bestand darin, ein Mittel zu entwickeln, das in üblichen Mengen der Emulsion zugesetzt sowohl eine möglichts optimale Schaumarmut als auch Emulgierwirkung und antikorrosive Eigenschaften besitzt, d.h. es soll auch als Korrosionsinhibitor wirken.

Dieses Ziel wird erfinderungsgemäss mit dem im Patentanspruch 1 definierten Verfahren erreicht.

Bekanntlich führt die Umsetzung von Fettsäuren mit Dialkanolaminen bei Temperaturen unter 100° C unter Normaldruck zu den Salzen (Seifen), und bei Temperaturen von über 140° C zu Amiden und komplizierter aufgebauten Kondensationsprodukten. (Vgl. „Seifen, Öle, Fette, Wachse" 85, 853 (1962); US-Pat. 20 89 212; Bueren-Grossmann: „Grenzflächenaktive Substanzen", Verlag Chemie, Weinheim/Bergstr., S. 96 ff.) Die Säure und das Alkanolamin wurden dabei zumeist im Verhältnis 1:1 bis 1:2 umgesetzt.

Erfindungsgemäss hat sich nun gezeigt, dass die Kriterien
1. Umsetzungstemperaturen von 110 bis 140° C
2. Molverhältnis Säure zu Amin wie 1:1 bis 1:1,6
3. das Arbeiten in Abwesenheit von Lösungsmittel und eine Reaktionsführung bis zur Erreichung einer Säurezahl von 45 bis 75
zu Produkten führen, die allen genannten Erfordernissen optimal entsprechen und zwar in den selben Mengen, wie sie auch im Falle des Einsatzes von beispielsweise reinem Alkanolaminsalzen oder Amiden erforderlich waren. Dieser Befund ist zweifellos überraschend, wenn man bedenkt, dass man ohne weiteres annehmen konnte, dass in diesem mittleren Temperaturbereich die obenerwähnte Mischung auf chemischem Wege entsteht, die aber bisher nur dann einigemassen befriedigte, wenn sie in der mindestens doppelten Menge zum Einsatz kam. Diese Annahme war aber, wie von uns festgestellt wurde, irrig (vgl. Vergleich 6).

Ausgangsverbindungen zur Durchführung des erfindungsgemässen Verfahrens sind ungesättigte acyclische Fettsäuren oder Fettsäuregemische sowie Gemische von acyclischen gesättigten Fettsäuren mit den ungesättigten Fettsäuren mit 12 bis 30, vorzugsweise 12 bis 24 C-Atomen. Hierzu gehören vor allem Dodecylen-, Palmitolein-, Öl-, Elaidin-, Ricinol-, Eläostearin-, Arachidon-, Eruca-, Nervonsäure oder deren Gemische.

Geeignet sind auch in der Natur vorkommende Fettsäuregemische mit ungesättigten Anteilen wie Kokos-, Erdnussöl-, Palmkern-, Tallöl-, Talg-, Olivenölfettsäure. Auch Gemische mit Anteilen an gewissen Harzsäuren, wie Abietin oder Maleopimarsäure sind brauchbar.

Von den einzusetzenden Dialkanolaminen sind erfindungsgemäss Dialkanolamine zu verwenden, die pro Hydroxyalkylgruppe 2 bis 3 C-Atome besitzen. Technisch von besonderem Interesse sind Diethanol- und Diisopropanolamin.

Die Umsetzung findet in Abwesenheit von Lösungsmitteln bei Normaldruck oder autogenem Überdruck bei 110 bis 140, vorzugsweise 120 bis 130° C im Molverhältnis von 1:1,0 bis 1,6 vorzugsweise 1,1 bis 1,2 (Säurekomponente: Alkanolamin) statt. Die Reaktion, deren Dauer sich nach der gewählten Reaktionstemperatur richtet, wird abgebrochen, wenn die Reaktionsmischung eine Säurezahl von 45 bis 75 erreicht hat. Dies kann durch einfache Titration von entnommenen Proben bestimmt werden.

Die Einhaltung dieser Parameter ist sehr wichtig, da bereits geringfügige Abweichungen zu bedeutenden Minderungen der Wirkung führen.

Die erhaltenen Produkte, die bei Raumtemperatur flüssig sind, können sowohl in Wasser als auch in organischen Lösungsmitteln feindispers verteilt werden und lassen sich direkt erfindungsgemäss einsetzen.

Die erhaltenen Produkte werden, bezogen auf das Metallbearbeitungsmittel, zu 0,01 bis 5 Gew.-% eingesetzt.

Die nun folgenden Beispiele erläutern die Erfindung.

Beispiele

a) Herstellung

Beispiel 1

825 g Talgfettsäure (SZ:204) und 378 g Diethanolamin techn. werden in einem 2-l-Dreihals-Rührkolben, ausgerüstet mit Rührer, Thermometer und Destillationsbrücke, 5 Stunden bei 125° C kondensiert.

Man erhält 1184 g eines trüben, etwas pastösen Produktes.
Analytische Daten:
SZ: 56,5
Jod-FZ: 170

Beispiel 2

846 g Ölsäure (SZ:199) und
378 g Diethanolamin techn. werden analog Beispiel 1
5 Stunden bei 125° C kondensiert.
Man erhält 1212 g eines flüssigen, etwas trüben Produktes.
Analytische Daten:
SZ: 54,9
Jod-FZ: 110

Beispiel 3

915 g Tallölfettsäure (SZ: 184) und
378 g Diethanolamin techn. werden analog Beispiel 1
5 Stunden bei 125° C kondensiert.
Man erhält 1273 g eines klaren, flüssigen Produktes.
Analytische Daten:
SZ: 59,9
Jod-FZ: 30

Beispiel 4

840 g Erdnussölfettsäure (S: 200) und
378 g Diethanolamin techn. werden analog Beispiel 1
5 Stunden bei 125° C kondensiert.

Man erhält 1206 g eines etwas trüben, dickflüssigen Produktes.
Analytische Daten:
SZ: 59,4
Jod-FZ: 15

Beispiel 5

1988 g Tallölfettsäure (SZ:197,6) und
735 g Diethanolamin techn. und
14 g DHÄA-Katalysator (Dimethyl(-dihydroxy-äthylammoniumhydroxid)
werden in einem 4-l-Dreihalskolben
4½ Stunden bei 130° C kondensiert.
Man erhält ein klarflüssiges Produkt.
Analytische Daten:
SZ: 61,6
Jod-FZ: 150

Beispiel 6

1988 g Tallölfettsäure (SZ:197,6) und
1176 g Diethanolamin techn. und
16 g DHÄA-Katalysator werden in einem 4-l-Dreihalskolben
5¾ Stunden bei 130° C kondensiert.
Man erhält ein klares, flüssiges Produkt.
Analytische Daten:
SZ:56,0
Jod-FZ: 80

Beispiel 7

1988 g Tallölsäure (SZ:197,6) und
882 g Diethanolamin techn. und
14,4 g DHÄA-Katalysator werden
2¾ Stunden bei 140° C kondensiert.
Man erhält ein klares, flüssiges Produkt.
Analytische Daten:
SZ:52,2
Jod-FZ: 70

Beispiel 8

1988 g Tallölsäure (SZ:197,6) und
882 g Diethanolamin techn. und
14,4 g DHÄA-Katalysator werden
14¼ Stunden bei 120° C kondensiert.
Man erhält ein klares, flüssiges Produkt.
Analytische Daten:
SZ:62,7
Jod-FZ: 100

Beispiel 9

1988 g Tallölsäure (SZ:197,6) und
882 g Diethanolamin techn. und
14,4 g DHÄA-Katalysator werden
10 Stunden bei 130° C kondensiert.
Man erhält ein klares, flüssiges Produkt.
Analytische Daten:
SZ:44,8
Jod-FZ: 100

Beispiel 10

1988 g Tallölsäure (SZ:197,6) und
882 g Diethanolamin techn. und
14,4 g DHÄA-Katalysator werden
3 Stunden bei 130° C kondensiert.

Man erhält ein klares, flüssiges Produkt.
Analytische Daten:
SZ: 73,9
Jod-FZ: 70

In die anwendungstechnischen Prüfungen wurden ausserdem folgende Vergleichssubstanzen einbezogen:

Vergleich 1:

$C_{16}/C_{18}$-Fettsäuregemisch-Diethanolamid mit der Säurezahl ca. 20.

Vergleich 2:

$C_{16}/C_{18}$-Fettsäuregemisch-Diethanolamid mit der Säurezahl ca. 40.

Vergleich 3:

$C_{16}/C_{18}$-Fettsäuregemisch-Diethanolamid mit der Restsäurezahl ca. 10.

Vergleich 4:

Mischung des Fettsäuregemisches entsprechend Beispiel 3 mit Diethanolamin im Mol-Verhältnis 1:1,2 bei Raumtemperatur (Diethanolammoniumsalz).

Vergleich 5:

Fettsäuregemisch gemäss Beispiel 3, jedoch Kondensation bei 150°-165° C bis zur Restsäurezahl 5.

Vergleich 6:

Mischung von Vergleich 4 mit Vergleich 5 in dem Verhältnis, dass sich eine Säurezahl von ca. 60 ergibt.

Vergleich 7:

Fettsäuregemisch gemäss Beispiel 3, Bedingungen gemäss Beispiel 1, jedoch Kondensation bei 160° C.

Vergleich 8:

Fettsäuregemisch gemäss Beispiel 3, Bedingungen gemäss Beispiel 1, jedoch Molverhältnis 1: 0,9.

Vergleich 9:

Fettsäuregemisch gemäss Beispiel 3, Bedingungen gemäss Beispiel 1, jedoch Molverhältnis 1: 0,8.

Vergleich 10:

Fettsäuregemisch (Hauptanteil Stearinsäure) weitgehend ohne ungesättigte Anteile, Bedingungen gemäss Beispiel 1.

B) *Anwendungstechnische Prüfung*

Geprüft wurde die unter A) genannten Produkte, wie folgt:

Die korrosionsschützende Wirkung wurde durch den sogenannten „Herbert"-Korrosionstest und den „Grauguss"-Filtertest bestimmt. Die Schäumneigung wurde durch die „IG-Schlagmethode" in Anlehnung an DIN 53 902 ermittelt.

Die Korrosionstests wurden wie folgt durchgeführt:

a) Herbert-Korrosionstest

Die Korrosionsschutzwirkung wird in an Wirksubstanz 2%iger wässriger Emulsion und bei einer Wasserhärte von 10° dH an dem auf dem Metallverarbeitungssektor eingeführten Herberts-Test-System veranschaulicht. Dieses besteht aus einer standardisierten Grauguss-Platte und ebenfalls standardisierten Stahlspänen von 5 mm Länge, die von der Firma Alfred Herbert, Coventry/England geliefert werden. Die quadratische Platte mit den Abmessungen 100 × 100 × 5 mm wird vor der Prüfung mittels einer Bandschleifmaschine mit Korund-Schmirgelband der Körnung 120 sorgfältig abgeschliffen, mit Testbenzin und Äthanol gewaschen, sowie mit einem reinen Tuch getrocknet. Dann werden die mit dem Prüfsystem gelieferten Stahlspäne, die unter standardisierten Bedingungen aus 0,40%igem Kohlenstoffstahl gewonnen werden, mittels eines geeigneten Metall- oder Plastiklöffels mit dem Fassungsvermögen eines normalen Teelöffels in vier Häufchen so auf die vorbereitete Gussstahlplatte gesetzt, dass sie voneinander und von den Rändern der Platte gleichen Abstand haben. Die Späne sollen in einfacher Schicht bei engstmöglicher Lage liegen.

Die auf ihr Korrosionsverhalten zu prüfenden Emulsionen werden mittels einer Messpipette in solcher Menge auf die Späne-Häufchen gegeben, dass die die Gussstahlplatte erreichende Flüssigkeit gerade von den Spänen zusammengehalten wird. Nach einer Standzeit von 24 Stunden in einer Atmosphäre von 70% relativer Luftfeuchtigkeit werden die Späne von der Platte durch Kippen heruntergeschüttelt. Es hinterbleibt der deutlich sichtbare Umriss des angetrockneten wässrigen Mediums. An den Kontaktstellen der Späne mit der Platte haben sich je nach Korrosivität der Flüssigkeit Rostmarken kleinerer oder grösserer Ausdehnung ausgebildet, die auch zu einer geschlossenen Rostschicht zusammengewachsen sein können. Die Beurteilung kann durch visuelles Abschätzen in Flächenprozent Rostanteil geschehen.

b) Grauguss-Filtertest

Eine weitere Korrosionsprüfung besteht in der Grauguss-Filterprobe. Verwendet wird eine Petrischale von ca. 10 cm Innendurchmesser mit passender Deckelschale. In die Petrischale legt man ein Schwarzband-Rundfilter. Auf das Filter werden mit einem passenden Löffel 5 bis 10 g grobe Graugruss GG-20-Späne so verteilt, dass ein gleichmässiger Haufen in der Mitte entsteht, der ringsum ca. 1,5 cm vom Rand Abstand hat. Die Späne haben ca. 5 bis 8 mm Länge und müssen aus sauberem Grauguss-GG-20-Material ohne Verwendung von Bohröl oder sonstigen Kühlschmiermitteln gewonnen sein. Alle feinen Bestandteile müssen abgesiebt werden.

Von der auf Korrosivität zu prüfenden Emulsion werden jeweils 5 ml gleichmässig mit einer Meppipette auf die Späne gegeben. Der pH-Wert der Prüfflüssigkeit wird registriert, da er für die Beurteilung von wesentlicher Bedeutung ist. Er kann auf einen bestimmten Standardwert, z.B. 8,5 gestellt sein. Nach der Befeuchtung wird die Deckelschale aufgesetzt und 2 Stunden unter normalen Laborbedingungen bei 23° bis 25° C und ca. 70% relativer Luftfeuchtigkeit stehen gelassen. Danach wird der Deckel abgenommen und das Filter kurz umgekehrt und auf die Oberfläche von Leitungswasser gelegt, wodurch es von den Spänen befreit wird. Gleich darauf wird das so befreite Filterpapier mit einer Indikatorlösung folgender Zusammensetzung besprüht und dadurch durchtränkt:

1 g Kaliumhexacyanoferat (III)
30 g Kochsalz
1 l Wasser

Dann lässt man den Indikator 17 Sekunden lang an der Luft einwirken. Schliesslich wird sorgfältig in gliessendem Trinkwasser gespült und an mässig warmem Ort an der Luft getrocknet. Auf dem Filterpapier ergeben sich nach dieser Prozedur, je nach Korrosivität des Mediums, braungelbe, gelbe und/oder blaugrüne Flecken verschiedener Intensität, wobei die braungelbe oder gelbe Farbe ungünstiger zu bewerten ist. Ein einwandfreies Verhalten zeigt sich durch Fehlen jeglicher Braun- oder Gelbfärbung und allenfalls spurenweisem Vorhandensein von blaugrünen, blassen Flecken an. Die Filter sind völlig farbstabil und können deshalb zur Dokumentation dienen. Eine Bewertungsskala kann folgendermassen lauten:

sehr schlecht:
intensive grosse überwiegend gelbbraune Flecken;

schlecht:
intensivegrosse Flecken mit etwa gleichem gelbbraunen und blaugrünen Anteil;

mittelmässig:
abgeblasste mittelgrobe Flecken mit etwa gleichem gelben und blaugrünen Anteil;

gut:
stark abgeblasste, kleine (Stecknadelkopfgrosse) Flecken mit überwiegendem Anteil an blaugrün;

sehr gut:
keinerlei Flecken oder höchstens sehr wenige, sehr kleine blassblaugrüne Flecken.

c) Schaumverhalten

Es wurde in Anlehnung an die DIN 53 902 die Schlagmethode verwendet. Zur Prüfung genügte das einfache Prüfungsverfahren, bei dem der Stempel mit der Lochplatte per Hand 30mal in 30 s gleichmässig auf- und abgeführt und dann vorsichtig herausgezogen wird (IG-Schlagmethode). Das Schaumvolumen wird an dem graduierten Schaumzylinder nach 1, 5 und 10 min in ml abgelesen. Von Wichtigkeit sind daneben Angaben über Temperatur, Konzentration und Wasserhärte.

Das Emulgiervermögen wurde durch Auflösen von 10 Gew.-% — bezogen auf die Lösung — der jeweiligen zu testenden Substanz in Spindelöl und Emulgieren der erhaltenen Lösung in Wasser (10° d) visuell bestimmt (Lösung: Wasser = 1:1).

Ebenso werden die Verdünnungen dieser Emulsionen mit Wasser beurteilt, die einen Lösungsanteil von 20, 10, 5 und 2 vol.% enthalten.

Hierbei gilt folgende Bewertungsskala für die Emulsionen nach 38 Stunden:

| | |
|---|---|
| sehr gut: | Emulsionen sind sehr stabil |
| gut: | Emulsionen sind weitgehend stabil (geringe Aufrahmung) |
| mittelmässig: | Emulsionen zeigen Aufrahmungen oder geringe Abscheidungen |
| schlecht: | Emulsionen zeigen Abscheidungen |
| sehr schlecht: | Emulsionen sind nicht herstellbar. |

Die Ergebnisse sind aus den folgenden Tabellen 1 und 2 ersichtlich.

Tabelle 1: Erfindungsgemäss hergestellte Substanzen

| | Äusseres | Löslichkeit in Spindelöl (10%ig) | pH-Wert (1%ig in Wasser) | Schaumvolumen Schlagmethode, 2 g/l dest. Wasser, RT, in ml | | | Emulgier-wirkung 10%ig auf Spindelöl, 10°d Wasser | Korrosionsschutz der 2%igen Emulsionen | |
|---|---|---|---|---|---|---|---|---|---|
| | | | | nach 1 min | nach 5 min | nach 10 min | | Herbert-Test (Flächen-% Rost) | Grauguss-Filterpapier-Test |
| Beispiel 1 | gelartig etwas trüb | klar | 9,3 | 180 | 160 | 160 | sehr gut/gut | 2 | sehr gut |
| Beispiel 2 | gelartig flüssig etwas trüb | klar | 9,5 | 560 | 510 | 490 | sehr gut | 0 | sehr gut/gut |
| Beispiel 3 | klar, flüssig | klar | 9,2 | 300 | 270 | 270 | seht gut | 1 | sehr gut/gut |
| Beispiel 4 | gelartig, flüssig, etwas trüb | klar | 9,6 | 620 | 560 | 540 | sehr gut | 0 | sehr gut |
| Beispiel 5 | klar, flüssig | klar | 9,5 | 280 | 240 | 190 | sehr gut | 1 | gut |
| Beispiel 6 | klar, flüssig | etwas trüb | 9,6 | 520 | 480 | 460 | sehr gut | 0 | sehr gut/gut |
| Beispiel 7 | klar, flüssig | klar | 9,5 | 230 | 200 | 200 | sehr gut/gut | 0 | gut |
| Beispiel 8 | klar, flüssig | klar | 9,4 | 230 | 230 | 230 | sehr gut | 0 . | sehr gut/gut |
| Beispiel 9 | klar, flüssig | klar | 9,5 | 220 | 200 | 200 | sehr gut | <1 | gut |
| Beispiel 10 | klar, flüssig | klar | 9,4 | 500 | 420 | 400 | sehr gut | 5 | gut |

*Tabelle 2: Vergleichssubstanzen*

| | Äusseres | Löslichkeit in Spindelöl (10%ig) | pH-Wert (1%ig in Wasser) | Schaumvolumen Schlagmethode, 2 g/l dest. Wasser, RT, in ml | | | Emulgier-wirkung 10%ig auf Spindelöl, 10°d Wasser | Korrosionsschutz der 2%igen Emulsionen | |
| --- | --- | --- | --- | --- | --- | --- | --- | --- | --- |
| | | | | nach 1 min | nach 5 min | nach 10 min | | Herbert-Test (Flächen-% Rost) | Grauguss-Filterpapier-Test |
| Vergleich 1 | klar, flüssig | klar | 10,0 | 150 | 150 | 130 | mittelmässig | 30 | mittelmässig |
| Vergleich 2 | klar, flüssig | abgetrennt | 9,9 | 410 | 360 | 340 | gut | 10 | gut/mittelmässig |
| Vergleich 3 | klar, flüssig | klar | 9,8 | 35 | 30 | 25 | mittelmässig | 1 | gut/mittelmässig |
| Vergleich 4 | fest, abgetrennt | klar | 9,3 | 1100 | 1020 | 930 | sehr gut | 80 | schlecht |
| Vergleich 5 | klar, flüssig | klar | 9,7 | 30 | 30 | 30 | mittelmässig | 80 | schlecht |
| Vergleich 6 | klar, flüssig | klar | 9,5 | 260 | 240 | 220 | gut | 30 | mittelmässig |
| Vergleich 7 | klar, flüssig | abgetrennt | 9,6 | 500 | 400 | 380 | gut | 20 | mittelmässig |
| Vergleich 8 | klar, flüssig | klar | 8,9 | 320 | 190 | 160 | sehr gut/gut | 10 | mittelmässig |
| Vergleich 9 | klar, flüssig | klar | 8,9 | 240 | 230 | 230 | mittelmässig | 40 | mittelmässig |
| Vergleich 10 | fest, pastös | abgetrennt | 9,6 | 120 | 90 | 80 | mittelmässig | 30 | gut/mittelmässig |

**Patentansprüche**

1. Verfahren zur Herstellung von Umsetzungsprodukten von Alkanolaminen mit ungesättigten $C_{12}$- bis $C_{30}$-Fettsäuren oder $C_{12}$- bis $C_{30}$-fettsäuregemischen mit ungesättigten Anteilen durch Umsetzung der Komponenten bei erhöhter Temperatur, dadurch gekennzeichnet, dass man die Fettsäurekomponente und mindestens ein Dialkanolamin mit 2 bis 3 C-Atomen pro Hydroxyalkylrest im Molverhältnis 1 : (1,0 bis 1,6) bei Temperaturen von 110 bis 140° C unter Ausschluss von Lösungsmitteln aufeinander einwirken lässt und die Reaktion abbricht, wenn die Reaktionsmischung eine Säurezahl von 45 bis 75 aufweist.

2. Verwendung der nach dem Verfahren gemäss Anspruch 1 erhaltenen Produkte als technische Emulgatoren und Korrosionsschutzmittel.

**Revendications**

1. Procédé de préparation de produits de réaction d'alcanolamines avec des acides gras en $C_{12}$ à $C_{30}$ insaturés ou de mélanges d'acides gras en $C_{12}$ à $C_{30}$ à portions insaturées, par réaction des composants à température élevée, caractérisé par le fait que l'on fait agir les uns sur les autres les composants d'acides gras et au moins une dialcanolamine ayant 2 à 3 atomes C par reste hydroxyalkyle en rapport molaire 1/(1,0 à 1,6), à des températures de 110 à 140° C, en l'absence de solvants et l'on arrête la réaction quand le mélange de réaction présente un indice d'acide de 45 à 75.

2. Utilisation des produits obtenus par le procédé selon la revendication 1, comme émulsifiants et agents anticorrosion industriels.

**Claims**

1. A process for the preparation of reaction products of alkanolamines with unsaturated fatty acids of 12 to 30 carbon atoms or fatty acid mixtures of 12 to 30 carbon atoms containing unsaturated constituents by reacting the components at elevated temperature, wherein the fatty acid component and at least one dialkanolamine of 2 or 3 carbon atoms per hydroxyalkyl radical are allowed to act on one another in a molar ratio of 1 : 1.0 to 1.6 at a temperature of from 110 to 140° C in the absence of solvents, and the reaction is discontinued when the reaction mixture has an acid number of 45 to 75.

2. The use of the products obtained by the process as claimed in claim 1 as industrial emulsifiers and corrosion inhibitors.